# EUROPEAN PATENT APPLICATION

(11) **EP 4 535 135 A1**
(43) Date of publication of application: **09.04.2025**
(21) Application number: 22943824.7
(22) Date of filing: 27.05.2022
(51) Int. Cl.: G06F 3/0338

(54) **CONTROLLER DEVICE**

(71) Applicant: Sony Interactive Entertainment Inc., Tokyo 108-0075 (JP)
(72) Inventor: TOGAWA, Keiji, Tokyo 108-0075 (JP)
(74) Representative: D Young & Co LLP
(86) International application number: PCT/JP2022/021817
(87) International publication number: WO 2023/228424

(57) **Abstract**

Provided are an operation part that is tiltable, a drive unit that generates power used for tilt control of the operation part, a transmission unit that permits or interrupts transmission of the power generated by the drive unit to the operation part, and a control unit that controls the transmission unit. The control unit controls the transmission unit in such a manner as to prohibit transmission of the power generated by the drive unit to the operation part at least while a tilt direction or a tilt angle of the operation part meets a predetermined condition.

## Description

### [Technical Field]

The present invention relates to a controller device connected to an information processing device to accept operation from a user.

### [Background Art]

A controller device which includes a tiltable operation part has been employed as an input device for many information processing devices, such as game consoles for household use. In addition, there has also been known such a controller device which controls a tilt angle and a tilt direction of the operation part by using an actuator to present tactile force to a user of the controller device.

### [Summary]

### [Technical Problem]

In current circumstances, however, a sense of operation felt by the user operating the operation part included in a configuration which gives external force other than returning force to the operation part by an actuator or the like is different from a sense of operation felt by the user operating the operation part included in a configuration which gives only returning force by an elastic body or the like, even in a state of no external force being applied from the actuator in the former configuration. Accordingly, such a user who is accustomed to using a controller device having no actuator may feel a strange sense of operation.

The present invention has been developed in consideration of the abovementioned circumstances. One object of the present invention is to provide a controller device capable of reducing a strange sense of operation given by an operation part in a state of no external force being applied from an actuator, for example.

### [Solution to Problem]

A controller device according to one aspect of the present invention includes an operation part that is tiltable, a drive unit that generates power used for tilt control of the operation part; a transmission unit that permits or interrupts transmission of the power generated by the drive unit to the operation part, and a control unit that controls the transmission unit. The control unit controls the transmission unit in such a manner as to prohibit transmission of the power generated by the drive unit to the operation part at least while a tilt direction or a tilt angle of the operation part meets a predetermined condition.

### [Advantageous Effect of Invention]

The controller device according to the one aspect of the present invention configured as described above is capable of reducing a strange sense of operation given by an operation part in a state of no external force being applied from an actuator, for example.

### [Brief Description of Drawings]

[FIG. 1]

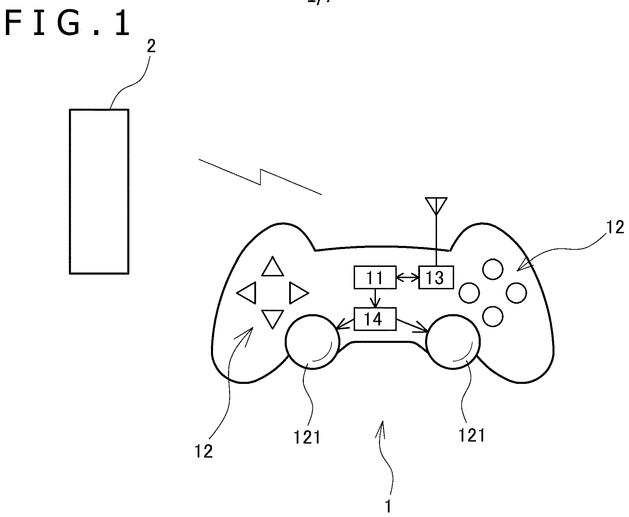

   FIG. 1 is a block diagram illustrating a schematic configuration of a controller device according to an embodiment of the present invention.
[FIG. 2]

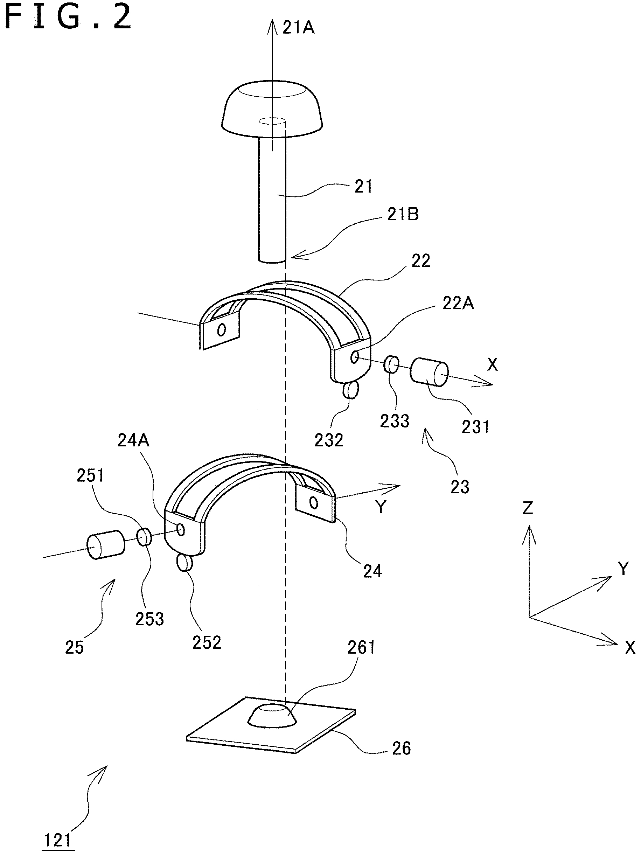

   FIG. 2 is an exploded perspective view illustrating an example of a tilt operation part included in the controller device according to the embodiment of the present invention.
[FIG. 3]

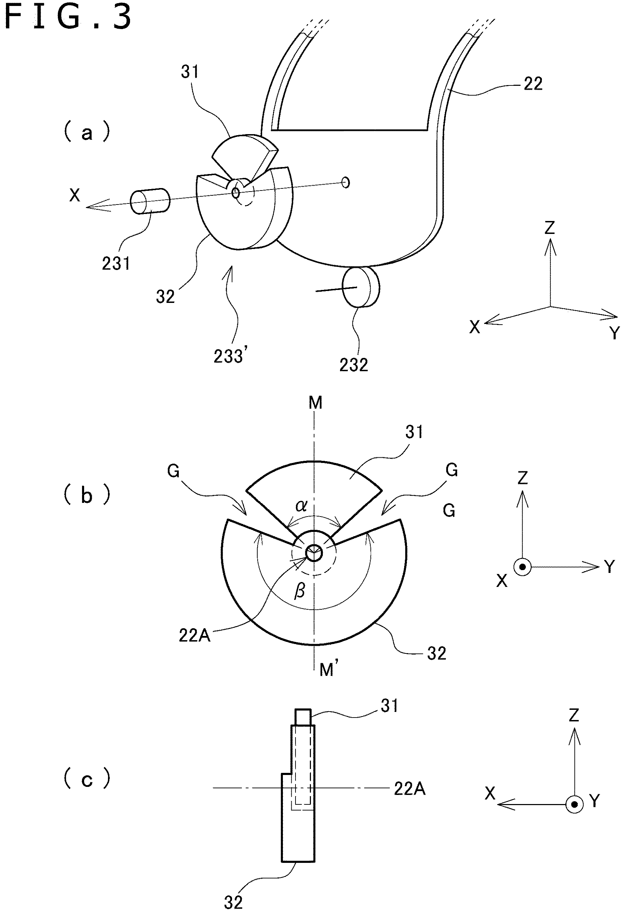

   FIG. 3 is a schematic configuration view illustrating an example of a clutch member included in the controller device according to the embodiment of the present invention.
[FIG. 4]

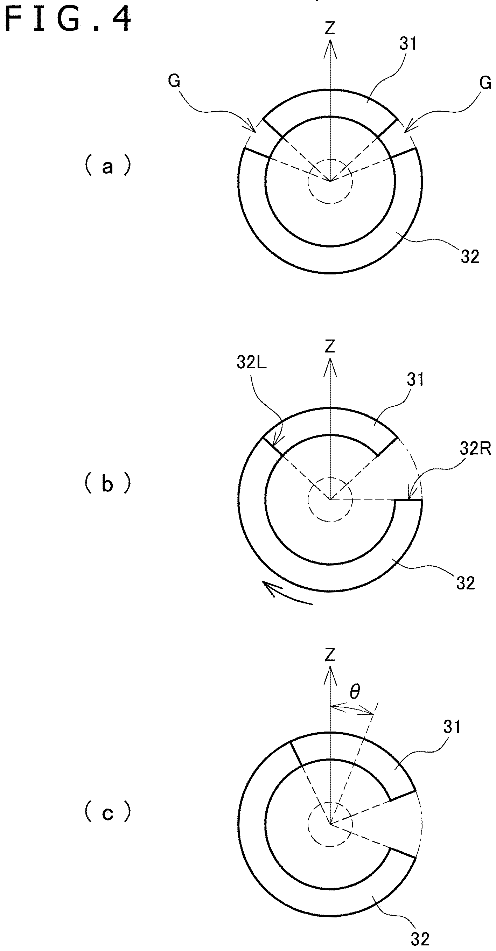

   FIG. 4 is an explanatory diagram illustrating an action example of the clutch member included in the controller device according to the embodiment of the present invention.
[FIG. 5]

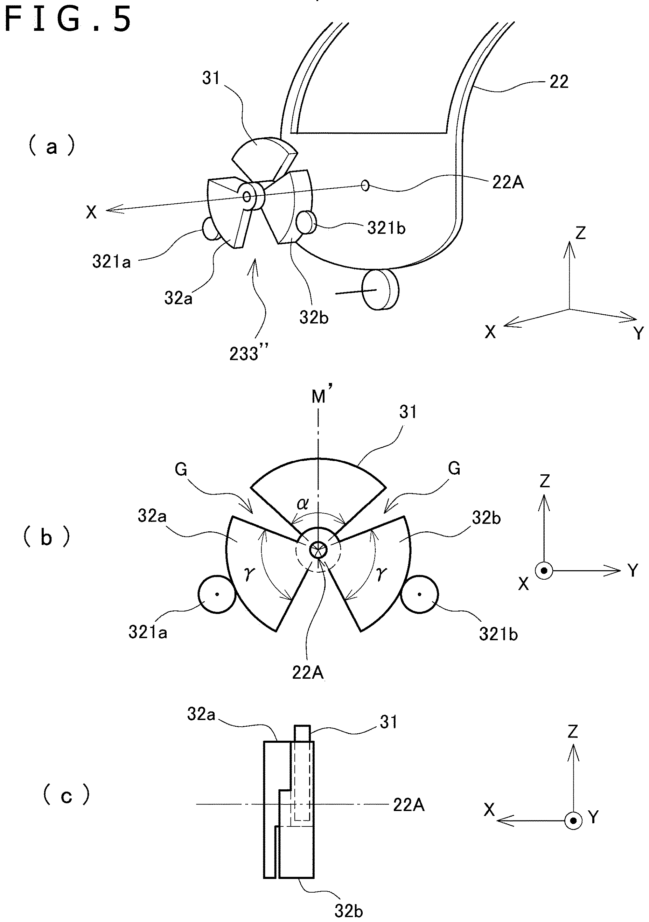

   FIG. 5 is a schematic configuration view illustrating a different example of the clutch member included in the controller device according to the embodiment of the present invention.
[FIG. 6]

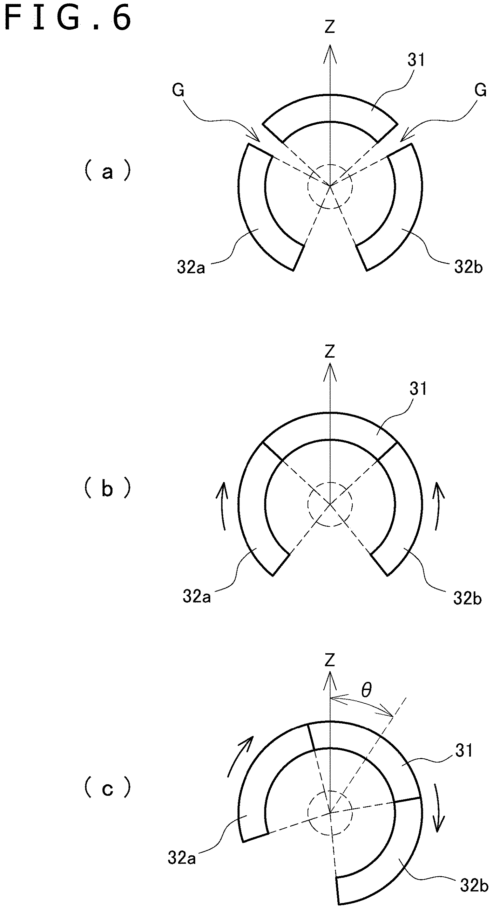

   FIG. 6 is an explanatory diagram illustrating a different action example of the clutch member included in the controller device according to the embodiment of the present invention.
[FIG. 7]

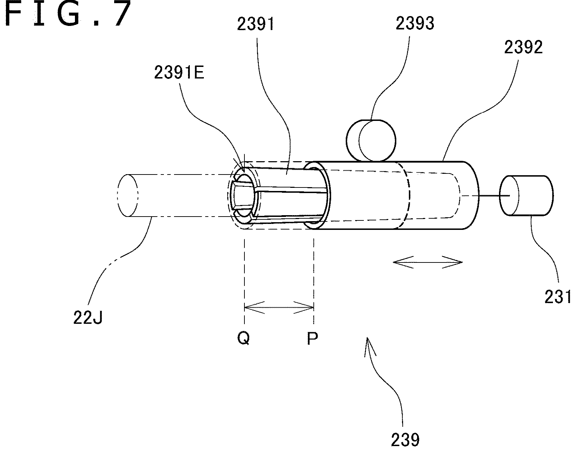

   FIG. 7 is a schematic configuration view illustrating a further different example of the clutch member included in the controller device according to the embodiment of the present invention.

### [Description of Embodiment]

An embodiment of the present invention will be described with reference to the drawings. As illustrated in FIG. 1 by way of example, a controller device 1 according to the embodiment of the present invention includes a control unit 11, an operation unit 12, a communication unit 13, and a drive control unit 14. In addition, the controller device 1 is communicably connected to an information processing device 2.

The information processing device 2 herein is a game console for household use, a personal computer, or the like, and is configured to receive information indicating operation input to the controller device 1 from a user, and execute predetermined information processing such as game processing. Moreover, the information processing device 2 in the present embodiment sends to the controller device 1 a control instruction for controlling the drive control unit 14 during a process of game processing, for example.

The control unit 11 of the controller device 1 is a program control device such as a microcomputer including a memory device, and acts in accordance with a program stored in the memory device. According to the example of the present embodiment, the control unit 11 sends information indicating operation which has been input to the operation unit 12 from the user, to the information processing device 2 via the communication unit 13. Moreover, the control unit 11 controls actions of a first actuator 23 and a second actuator 25 in reference to a control instruction input from the information processing device 2. Details of this control will be described below.

The operation unit 12 in a certain example of the present embodiment includes tilt operation parts 121 as tiltable components, such as joysticks. In addition, the operation unit 12 may include other operation parts, such as a push button and a locking button. The operation unit 12 outputs to the control unit 11 information indicating details of operation performed on these operation parts. For example, each of the tilt operation parts 121 outputs to the control unit 11 information which indicates tilt angles in X-axis and Y-axis directions crossing each other at right angles and defined beforehand. Moreover, each of the tilt operation parts 121 may be pushed in a direction crossing both the X-axis and Y-axis directions at right angles (Z-axis direction). In this case, information indicating a push amount is also output to the control unit 11.

As obvious from an outline of the tilt operation part 121 illustrated in FIG. 2 by way of example, each of the tilt operation parts 121 in this example includes a columnar body 21 to be tilted, a first guide 22, the first actuator 23, a second guide 24, the second actuator 25, and a pedestal 26. FIG. 2 is an exploded perspective view of the tilt operation part 121. In addition, it is assumed here that the first guide 22 and the second guide 24 are rotatably supported around axes 22A and 24A, respectively, at least in predetermined angle ranges, and that directions of the axes 22A and 24A correspond to the X-axis and Y-axis directions, respectively. Moreover, a direction crossing both the X-axis and the Y-axis at right angles corresponds to the Z-axis. Accordingly, the first guide 22 rotates around the axis 22A in a Y-Z plane. Meanwhile, the second guide 24 rotates around the axis 24A in an X-Z plane.

The first guide 22 regulates movement of the columnar body 21 in one direction (X-axis direction). As described above, the first guide 22 is rotatably supported around the axis 22A in the Y-Z plane within the predetermined angle range. It is further assumed that this angle range contains an angle range where the columnar body 21 becomes parallel to the Z-axis direction.

The first actuator 23 includes a motor 231 functioning as a drive unit, a sensor 232, and a clutch member 233 functioning as a transmission unit. For example, the motor 231 is a three-phase type (a type having 3n (n: natural number) stators) brushless direct current (DC) motor, and is configured to supply current to each of stator coils in the respective phases in accordance with an instruction input from the drive control unit 14 described below and control a rotation direction, a rotation speed, a rotation amount, and the like of a rotor. A rotation shaft of the rotor of the motor 231 is connected to the axis 22A of the first guide 22 via the clutch member 233.

According to one example of the present embodiment, the clutch member 233 is an electromagnetic clutch, and may be a clutch having no gap, such as a disc-clutch and a claw clutch typically used, or a gap-type clutch. In accordance with an instruction input from the drive control unit 14, the clutch member 233 acts in either a state where power of the rotation shaft of the rotor of the motor 231 is transmitted to the axis 22A of the first guide 22 (transmission state), or a state where power of the rotation shaft of the rotor of the motor 231 is not transmitted to the axis 22A of the first guide 22 (interruption state). While the clutch member 233 is in the transmission state, the first guide 22 is rotated around the axis 22A in the Y-Z plane by the power of the motor 231.

For example, the sensor 232 is an angle sensor such as a rotary encoder and a potentiometer, and is configured to sequentially detect a tilt angle θc of the axis 22A of the first guide 22 on an assumption that the 0 degree is designated as a predetermined standard direction (e.g., a direction of the first guide 22 in a state where the columnar body 21 is allowed to extend in the Z-axis positive direction), and output a result of this detection to the control unit 11 and the drive control unit 14. For example, the sensor 232 is a rotary encoder directly attached to the axis 22A of the first guide 22, for example, and detects the tilt angle θc of the axis 22A of the first guide 22 in both the case where the clutch member 233 is in the transmission state and the case where the clutch member 233 is in the interruption state.

The second guide 24 regulates movement of the columnar body 21 in one direction (Y-axis direction). As described above, the second guide 24 is rotatably supported around the axis 24A in the X-Z plane within the predetermined angle range. It is further assumed that this angle range contains an angle range where the columnar body 21 becomes parallel to the Z-axis direction.

The second actuator 25 includes a motor 251 functioning as a drive unit, a sensor 252, and a clutch member 253 functioning as a transmission unit. Similarly to the motor 231, the motor 251 is a three-phase type brushless DC motor, for example, and is configured to supply current to each of stator coils in the respective phases in accordance with an instruction input from the drive control unit 14 described later and control a rotation direction, a rotation speed, and a rotation amount of a rotor of the motor 251. A rotation shaft of the rotor of the motor 251 is transmitted to the axis 24A of the second guide 24 via the clutch member 253.

The clutch member 253 is a component similar to the clutch member 233, and acts in either a transmission state where power of the rotation shaft of the rotor of the motor 251 is transmitted to the axis 24A of the second guide 24 or an interruption state where power of the rotation shaft of the rotor of the motor 251 is not transmitted to the axis 24A of the second guide 24 in accordance with an instruction input from the drive control unit 14. While the clutch member 253 is in the transmission state, the second guide 24 is rotated around the axis 24A in the X-Z plane by the power of the motor 251.

For example, the sensor 252 is an angle sensor such as a rotary encoder and a potentiometer, and is configured to sequentially detect a tilt angle ϕc of the axis 24A of the second guide 24 on an assumption that the 0 degree is designated as a predetermined standard direction (e.g., a direction of the second guide 24 in a state where the columnar body 21 is allowed to extend in the Z-axis positive direction), and output a result of this detection to the control unit 11 and the drive control unit 14. For example, the sensor 252 is a rotary encoder directly attached to the axis 24A of the second guide 24, for example, and detects the tilt angle ϕc of the axis 24A of the second guide 24 in both the case where the clutch member 253 is in the transmission state and the case where the clutch member 253 is in the interruption state.

The pedestal 26 supports a base 21B of the columnar body 21. It is assumed that the pedestal 26 supports the base 21B of the columnar body 21 in such a position where an axis 21A of the columnar body 21 extends in the Z-axis positive direction in a state where neither the first guide 22 nor the second guide 24 is rotating (in a 0-degree state) (a posture of the columnar body 21 in this state will hereinafter be referred to as an origin for convenience). According to the example of the present embodiment, the pedestal 26 supports the base 21B of the columnar body 21 via an elastic body 261. The elastic body 261 may be rubber, a helical spring, or the like.

For example, the communication unit 13 is a wired interface such as a universal serial bus (USB), a wireless interface such as Bluetooth (registered trademark), or the like, and is connected to the information processing device 2 by wired or wireless connection in a manner communicable with the information processing device 2. The communication unit 13 accepts a control instruction from the information processing device 2 to control the drive control unit 14, and outputs this control instruction to the drive control unit 14. Moreover, the communication unit 13 may be configured to accept from the drive control unit 14 the detection result θc of the tilt angle detected around the axis 22A of the first guide 22 by the sensor 232 of the first actuator 23, and also the detection result ϕc of the tilt angle detected around the axis 24A of the second guide 24 by the sensor 252 of the second actuator 25, and send pieces of information indicating these detection results to the information processing device 2.

The communication unit 13 further sends information indicating operation input from the user via the operation unit 12 (including the detection results obtained by the sensors 232 and 252), and the like to the information processing device 2 via the communication unit 13 in accordance with an instruction input from the control unit 11.

The drive control unit 14 which is a processor including a motor driver, for example, includes a memory for retaining a program, and is configured to act in accordance with the program retained in the memory and issue an instruction which designates current for controlling rotation directions, rotation speeds, rotation amounts, and the like of the motors 231 and 251 of the first and second actuators 23 and 25. Moreover, the drive control unit 14 controls each of the clutch members 233 and 235 included in the first and second actuators 23 and 25.

Described hereinafter will be control actions performed by the drive control unit 14 for controlling the first and second actuators 23 and 25. The drive control unit 14 accepts input of information indicating a tilt direction and a tilt angle of the tilt operation part 121 or information indicating that tilt control is not to be performed (hereinafter referred to as a release instruction) from the information processing device 2 as a control instruction.

In response to input of pieces of information indicating the tilt direction and the tilt angle, the drive control unit 14 performs control for bringing each of the clutch member 233 of the first actuator 23 and the clutch member 253 of the second actuator 25 into a connection state. Thereafter, the drive control unit 14 designates the tilt direction and the tilt angle indicated by the pieces of input information as a target direction and a target angle, and controls each of the motors 231 and 251 of the first and second actuators 23 and 25 such that the columnar body 21 tilts in the target direction and at the target angle.

As current to be supplied to each of the motors 231 and 235, this control determines current sufficient for reaching the target rotation angles of the motors 231 and 251 based on the output from the sensor 232 or the sensor 252, and issues an instruction for supplying the determined current to control the rotation directions, the rotation amounts, and the like of the motors 231 and 251. This control is widely known as what is generally called feedback control, and hence, detailed description thereof is not presented here.

Moreover, the drive control unit 14 according to the present embodiment controls at least either the clutch member 233 of the first actuator 23 or the clutch member 253 of the second actuator 25, both functioning as the transmission unit, while at least either the tilt direction or the tilt angle of the columnar body 21 as the operation part meets a predetermined condition. In this manner, the drive control unit 14 produces the state for preventing transmission of power generated by the motors 231 and 251 to the first and second guides 22 and 24 so as to achieve the interruption state for prohibiting transmission of this power to the columnar body 21 as the operation part.

In a specific example, the drive control unit 14 performs control for bringing each of the clutch member 233 of the first actuator 23 and the clutch member 253 of the second actuator 25 into the interruption state when an absolute value of the tilt angle of the columnar body 21 in the Y-Z plane (i.e., the tile angle θc around the axis 22A of the first guide 22) and an absolute value of the tilt angle of the columnar body 21 in the X-Z plane (i.e., the tile angle ϕc around the axis 24A of the second guide 24) become lower than an angle threshold θth determined beforehand and an angle threshold ϕth determined beforehand, respectively. According to this example, the power of the first and second actuators 23 and 25 is cut from the columnar body 21 while the tilt angle of the columnar body 21 is relatively small. In this case, only returning force for returning to the origin is given only to the columnar body 21 by the elastic body 261 supporting the base of the columnar body 21.

Accordingly, a sense of operation given by the operation unit at this time is similar to a sense of operation given in a case where no actuator for driving the operation part is provided. As a result, strangeness felt by the user is reduced.

According to this example, the drive control unit 14 may perform control for bringing each of the clutch member 233 of the first actuator 23 and the clutch member 253 of the second actuator 25 into the connection state when an absolute value of the tilt angle of the columnar body 21 in the Y-Z plane (i.e., the tile angle θc around the axis 22A of the first guide 22) exceeds the angle threshold θth determined beforehand or when an absolute value of the tilt angle of the columnar body 21 in the X-Z plane (i.e., the tile angle ϕc around the axis 24A of the second guide 24) exceeds the angle threshold ϕth determined beforehand, as a result of operation of the columnar body 21 by the user in the interruption state of the clutch members 233 and 253, for example.

Moreover, the condition required for bringing the clutch member 231 or the clutch member 251 into the interruption state is not limited to the example described here. For example, in response to reception of the release instruction from the information processing device 2, the drive control unit 14 may perform control for bringing each of the clutch member 233 of the first actuator 23 and the clutch member 253 of the second actuator 25 into the interruption state.

### [Action example]

The controller device 1 according to the embodiment of the present invention basically has the foregoing configuration, and acts in the following manner. In the following explanation, the controller device 1 is communicably connected to the information processing device 2.

When the user intending to operate the controller device 1 tilts the columnar body 21 which is a tiltable operation part, the first and second guides 22 and 24 rotate around the axes 22A and 24A, respectively, according to this tilt operation. In addition, the sensors 232 and 235 of the first and second actuators 23 and 25 acquire the pieces of information θc and ϕc indicating tilt angles of the columnar body 21 around the Y-Z plane and the X-Z plane, respectively, crossing each other at right angles. The controller device 1 sends the acquired pieces of information to the information processing device 2.

The information processing device 2 is a computer device which executes processing of a game program or the like, and is configured to accept the pieces of information θc and ϕc indicating the tilt angles of the columnar body 21 included in the operation unit 12 of the controller device 1, and supply the pieces of information for processing of a game program or the like. Specifically, the information processing device 2 may control actions of game characters in reference to the pieces of information indicating these tilt angles.

Moreover, assuming that the tilt direction and the tilt angle of the columnar body 21 functioning as a tilt part included in the controller device 1 are controlled under the processing of the game program or the like according to the tilt operation by the user or regardless of the tilt operation by the user, the information processing device 2 sends a control instruction containing pieces of information indicating the tilt direction and the tilt angle to the controller device 1.

In response to reception of this control instruction, the controller device 1 performs feedback control of the first and second actuators 23 and 25 on the basis of the received control instruction with the tilt direction and the tilt angle contained in the control instruction used as targets, and tilts the columnar body 21 in the tilt direction and at the tilt angle corresponding to the targets. In addition, if either the clutch member 233 of the first actuator 23 or the clutch member 253 of the second actuator 25 is in the interruption state at the time of reception of the control instruction, the controller device 1 brings each of the clutch member 233 of the first actuator 23 and the clutch member 253 of the second actuator 25 into the connection state by controlling the clutch member in the interruption state, and then performs the feedback control described above.

In this manner, such actions as presentation of tactile force in response to operation by the user and control of the posture of the columnar body 21 (tilt direction, tilt angle) regardless of operation by the user are achievable.

Further, when the posture of the columnar body 21 functioning as the tilt part included in the controller device 1 is intended to return to the origin under the processing of the game program or the like in a state of absence of operation by the user, the information processing device 2 sends pieces of information indicating the tilt direction and the tilt angle of the tilt operation part 121 or information indicating that tilt control is not to be performed (release instruction) to the controller device 1 as a control instruction.

In response to reception of this release instruction, the controller device 1 performs control for bringing each of the clutch member 233 of the first actuator 23 and the clutch member 253 of the second actuator 25 into the interruption state.

In this manner, the columnar body 21 is separated from the power of the actuator. Accordingly, only returning force for returning to the origin is given only to the columnar body 21 by the elastic body 261 supporting the base of the columnar body 21. In this case, a sense of operation given by the columnar body 21 corresponding to the operation part becomes similar to a sense of operation given in a case where no actuator for driving the columnar body 21 is provided. As a result, strangeness felt by the user is reduced.

In addition, the information processing device 2 may retain situation information indicating whether the clutch members 233 and 253 of the tilt operation part 121 of the controller device 1 (or of a plurality of the tilt operation parts 121) are currently in the connection state (state allowing power transmission) or in the interruption state (state prohibiting power transmission).

Thereafter, when control of the tilt direction and the tilt angle of the tilt operation part 121 is required under the processing of the game program or the like in the state where power transmission by the clutch members 233 and 253 is prohibited, the information processing device 2 examines whether or not the clutch members 233 and 253 are in the interruption state with reference to the situation information described above. When determining that the clutch members 233 and 253 are in the interruption state here, the information processing device 2 may instruct the controller device 1 to bring the clutch members 233 and 253 into the connection state (connection instruction), and subsequently output pieces of information indicating the tilt direction and the tile angle of the tilt operation part 121 as a control instruction.

According to this example, the controller device 1 having received the connection instruction from the information processing device 2 performs control for bringing each of the clutch member 233 of the first actuator 23 and the clutch member 253 of the second actuator 25 into the connection state. Moreover, the controller device 1 subsequently receives information indicating the tilt direction and the tilt angle as a control instruction, performs feedback control of the first and second actuators 23 and 25 on the basis of this received control instruction with the tilt direction and the tilt angle contained in the control instruction used as targets, and tilts the columnar body 21 in the tilt direction and at the tilt angle corresponding to the targets.

### [Different example of clutch member (1)]

While each of the clutch member 233 of the first actuator 23 and the clutch member 253 of the second actuator 25 in the foregoing description is constituted by a typical electromagnetic clutch, each of the clutch members 233 and 253 in the present embodiment is not limited to this example.

For example, each of the clutch member 233 of the first actuator 23 and the clutch member 253 of the second actuator 25 may be a one-way clutch (corresponding to a one-directional transmission member) which transmits rotation to output shafts (shafts connected to the axes 22A and 24A of the first guide 22 and the second guide 24) at the time of rotation of input shafts (shafts connected to rotation shafts of the motors 231 and 251), but does not transmit the power to the input shafts due to idling of the output shafts at the time of rotation of the output shafts.

According to this example, in a state of no power transmission to the input shafts (state of absence of rotation of the motor), the corresponding output shafts are caused to idle. Accordingly, only returning force for returning to the origin is given only to the columnar body 21 by the elastic body 261 supporting the base of the columnar body 21. In this case, a sense of operation given by the columnar body 21 corresponding to the operation part becomes similar to a sense of operation given in a case where no actuator for driving the columnar body 21 is provided. As a result, strangeness felt by the user is reduced.

### [Different example of clutch member (2)]

Alternatively, the clutch member of the first actuator 23 (or the clutch member of the second actuator 25) may be a clutch member presented in the following example. While an example of the first actuator 23 will be described below, a similar configuration may be applied to the second actuator 25.

Specifically, as illustrated in FIG. 3 by way of example, the first actuator 23 in a different example of the present embodiment includes the motor 231, the sensor 232, and a clutch member 233'. The clutch member 233' includes a following member 31 and a drive member 32. FIG. 3(a) is a schematic exploded perspective view of the clutch member 233'. FIG. 3(b) is a front view of the clutch member 233'. FIG. 3(c) is a side view of the clutch member 233'.

The following member 31 is supported around the axis 22A of the first guide 22 in such a manner as to be rotatable with the first guide 22. For example, as illustrated in FIG. 3, the following member 31 has a shape of a substantially circular sector or a sector-trapezoid (a circular sector from which a range of a predetermined distance from its center is removed) having a center angle α around a center located at the axis 22A (rotation axis) of the first guide 22. For example, the center angle α may be smaller than 180 degrees, smaller than 90 degrees in one example, or preferably smaller than 45 degrees.

The drive member 32 has a shape of a substantially circular sector or a sector-trapezoid having a center angle β around a center located at the axis 22A of the first guide 22, and is rotatably supported around the axis 22A of the first guide 22 regardless of the first guide 22. The following member 31 is disposed on a rotation track of the drive member 32. The center angle β of the drive member 32 is set such that "α + β < 360" holds. Accordingly, a gap G is formed between the following member 31 and the drive member 32 in such a state that a circumferential center M of the following member 31 is positioned in the Z-axis positive direction with respect to the center located at the axis 22A of the first guide 22 and that a circumferential center M' of the drive member 32 is positioned in the Z-axis negative direction. The gap G has an angle range of "360 - (α + β)" degrees.

The drive member 32 has a center fixed to the rotation shaft of the motor 231 disposed coaxially with the axis 22A. Accordingly, the drive member 32 is rotated around the axis 22A of the first guide 22 by the motor 231.

In an initial state, as obvious from an outline of the drive member 32 illustrated in FIG. 4(a), the drive member 32 is disposed with the predetermined gap G interposed between the following member 31 and each of the sides of the drive member 32. Note that an angle sensor (not illustrated, and simply referred to as a sensor hereinafter) or the like for detecting a position of the drive member 32 may be provided for the purpose of detection of the initial state. In this case, it is only required to perform feedback control of the position of the drive member 32 according to output from the sensor detecting the position of the drive member 32 at least while the drive member 32 is not in contact with the following member 31, such as a case when the drive member 32 moves to the initial position.

When the information processing device 2 here outputs a control instruction for tilting the columnar body 21 clockwise in the figure by an angle θ with respect to the Z-axis positive direction, the drive control unit 14 drives the motor 231 to tilt the first guide 22 until output θc from the sensor 232 coincides with θ as the target, with reference to this output. In this case, as illustrated in FIG. 4(b) by way of example, the drive member 32 idles until there is contact between a left side end 32L of the drive member 32 and the left side of the following member 31, and in this state, the first guide 22 is not tilted. Accordingly, the drive control unit 14 in this state still continues driving the motor 231 to achieve coincidence between the output θc of the sensor 232 and the target θ.

Thereafter, when the first guide 22 is tilted up to the angle θ by movement of the following member 31 pushed by the drive member 32 with the motor 231, the drive control unit 14 stops the action of the motor 231 on the basis of determination that the output θc coincides with the target θ, as illustrated in FIG. 4(c) by way of example. At this time, the drive control unit 14 controls the motor 231 in a direction for returning to θ when θc changes from θ. In addition, in a case where the state θc = θ illustrated in FIG. 4(c) by way of example is shifted to a position slightly rotated rightward (θc = θ + Δθ) in this example of the present embodiment, the drive control unit 14 moves the left side end 32L of the drive member 32 by Δθ. As a result, the columnar body 21 is moved toward the origin (i.e., leftward) by the elastic body 261, and the state θc = θ is maintained.

When the information processing device 2 in this state further outputs an instruction for tilting the columnar body 21 anticlockwise in the figure by an angle θ (indicated as -θ for convenience of explanation) with respect to the Z-axis positive direction, the drive control unit 14 reversely drives the motor 231 leftward to tilt the first guide 22 until output θc from the sensor 232 coincides with -θ as the target, with reference to this output. In this case, the drive member 32 idles until there is contact between a right side end 32R of the drive member 32 and the right side of the following member 31. At this time, the first guide 22 returns toward the origin by the force applied to the columnar body 21 for returning toward the origin by the elastic force of the elastic body 261. However, because θc is not -θ, the drive control unit 14 continues driving of the motor 231 to achieve coincidence between the output θc of the sensor 232 and θ as the target.

Thereafter, when the first guide 22 is tilted up to the angle - θ by movement of the following member 31 pushed by the drive member 32 with the motor 231, the drive control unit 14 stops the action of the motor 231 on the basis of determination that the output θc coincides with the target θ.

### [Different example of clutch member (3)]

Further, the clutch member of the first actuator 23 (or the clutch member of the second actuator 25) may be a further different clutch member presented in the following example. While an example of the first actuator 23 will be described below, a similar configuration may be applied to the second actuator 25.

Specifically, as illustrated in FIG. 5 by way of example, the first actuator 23 in a further different example of the present embodiment includes a pair of motors 321a and 321b, the sensor 232, and a clutch member 233". The clutch member 233" includes the following member 31 and a pair of drive members 32a and 32b.

Similarly to the following member 31 illustrated in FIG. 3 by way of example, the following member 31 has a shape of a circular sector or a sector-trapezoid having a center angle α around a center located at the axis 22A (rotation axis) of the first guide 22. Moreover, each of the drive members 32a and 32b has a shape of a circular sector or a sector-trapezoid having a center angle γ around a center located at the axis 22A of the first guide 22, and is rotatably supported around the axis 22A of the first guide 22 regardless of the first guide 22. The following member 31 is disposed on a rotation track of the drive members 32a and 32b. The center angle γ of each of the drive members 32a and 32b is set such that "α + 2γ < 360 degrees" holds. It is assumed that the gap G is formed between the following member 31 and the drive member 32a or the drive member 32b (the gap having the same angle for each) in an initial state. In addition, it is assumed that the drive member 32a is disposed on the left side of the following member 31 (angle θ negative direction) and that the drive member 32b is disposed on the right side of the following member 31 (angle θ positive direction) in the figure.

As in the above example, two angle sensors (not illustrated, and simply referred to as sensors hereinafter) or the like for detecting positions of the drive members 32a and 32b may be provided in this example for the purpose of detection of the initial state of the drive members 32a and 32b, for example. In this case, it is only required to perform feedback control of the positions of the drive members 32a and 32b according to output from the sensors detecting the positions of the drive members 32a and 32b, at least while the drive members 32a and 32b are not in contact with the following member 31, such as a case when the drive members 32a and 32b move to the initial positions.

In this example of the present embodiment, each of the pair of motors 321a and 321b is a three-phase type brushless DC motor, for example, and is configured to supply current to each of stator coils in the respective phases in accordance with an instruction input from the drive control unit 14 and control a rotation amount, a rotation speed, and a rotation direction of a rotor. This control will be described later.

According to this example, a gear train is provided on the outer circumferential side of each of the drive members 32. This gear train disposed on the left drive member 32a engages with a gear provided on the rotation shaft of the motor 321a, and is rotated around the axis 22A of the first guide 22 by the motor 321a. Meanwhile, the gear train disposed on the outer circumference of the right drive member 32b engages with a gear provided on the rotation shaft of the motor 321b, and is rotated around the axis 22A of the first guide 22 by the motor 321b. Note that the gears are not illustrated in FIGS. 5 and 6.

Described next will be control of the motors 321a and 321b by the drive control unit 14 in a case of use of the clutch member 233" in this example.

The drive control unit 14 performs various types of control, i.e., drive preparation control, drive control, and drive stop control, for the motors 321a and 321b. Specifically, in an initial state, as obvious from an outline of the following member 31 illustrated in FIG. 6(a), the following member 31 is disposed in such a position that the columnar body 21 is located at the position of the origin for extending in the Z-axis positive direction. The respective drive members 32a and 32b of the clutch member 233" are disposed with the predetermined gap G interposed between the following member 31 and each of the drive members 32a and 32b. In this state, the columnar body 21 corresponding to the operation part is not immediately tilted even when either the motor 321a or the motor 321b is driven. This state will hereinafter be referred to as an escape state, and positions of the respective drive members 32a and 32b in the escape state will be referred to as escape positions.

When the drive control unit 14 accepts a control instruction for tilting the columnar body 21 from the information processing device 2 in the escape state of the clutch member 233", the drive control unit 14 performs drive preparation control. In this drive preparation control, the drive control unit 14 rotates the drive member 32a in the angle θ positive direction until an end of the drive member 32a comes into contact with the following member 31. Moreover, the drive control unit 14 rotates the drive member 32b in the angle θ negative direction until an end of the drive member 32b comes into contact with the following member 31 (FIG. 6(b)). In this manner, in the state of contact between the drive members 32a and 32b and the following member 31, the columnar body 21 corresponding to the operation part is tilted when the motor 321a and 321b are driven. This state will hereinafter be referred to as a contact state, and positions of the drive members 32a and 32b in this state (positions of the drive members 32a and 32b in contact with the following member 31) will be referred to as contact positions. Accordingly, in the drive preparation control, the drive control unit 14 moves the drive members 32a and 32b from the escape positions to the contact positions.

After completion of the drive preparation control, i.e., when the drive members 32a and 32b are moved to the contact positions, the drive control unit 14 shifts to drive control. In the drive control, the drive control unit 14 supplies the same current to corresponding stator coils of the motors 321a and 321b. In other words, under the drive control, each of the motors 321a and 321b is so controlled as to obtain the same rotation direction, rotation speed, and rotation amount.

For example, in a case where a control instruction input from the information processing device 2 is such an instruction for tilting the columnar body 21 clockwise in the figure by an angle θ with respect to the Z-axis position direction, the drive control unit 14 drives the motors 321a and 321b to tilt the first guide 22 until output θc from the sensor 232 coincides with θ as the target, with reference to this output.

According to this example, the left drive member 32a pushes and moves the following member 31 by the power of the motor 321a. Thereafter, when the first guide 22 tilts up to the angle θ, the drive control unit 14 stops the actions of the motors 321a and 321b on the basis of determination that the output θc coincides with the target θ, as illustrated in FIG. 6(c) (when θc changes from θ, the motors 321a and 321b are controlled in directions for returning to θ).

When the information processing device 2 in this state further outputs an instruction for tilting the columnar body 21 anticlockwise in the figure by an angle θ (indicated as -θ for convenience of explanation) with respect to the Z-axis positive direction, the drive control unit 14 reversely drives the motors 321a and 321b leftward to tilt the first guide 22 until output θc from the sensor 232 coincides with -θ as the target, with reference to this output. At this time, the right drive member 32b rotates in the same direction and by the same angle as those of the left drive member 32a. Accordingly, the drive member 32b maintains the contact state with the following member 31. In other words, the clutch member 233" is in the contact state.

Accordingly, the right drive member 32b immediately pushes and moves the following member 31 by the power of the motor 321b. Thereafter, when the first guide 22 tilts up to the angle -θ, the drive control unit 14 stops the actions of the motors 321a and 321b on the basis of determination that the output θc coincides with the target θ.

Moreover, when the drive control unit 14 accepts a release instruction from the information processing device 2 as a control instruction, the drive control unit 14 executes drive stop control. In this drive stop control, the drive control unit 14 controls the motors 321a and 321b in such a manner that each of the drive members 32a and 32b moves to the position in the initial state illustrated in FIG. 6(a).

In this case, a sense of operation given by the columnar body 21 corresponding to the operation part becomes similar to a sense of operation given in a case where no actuator for driving the columnar body 21 is provided. As a result, strangeness felt by the user is reduced.

### [Different example of clutch member (3')]

Further, in the different example (3) of the clutch member, it is assumed that the left drive member 32a and the right drive member 32b are driven by the individual motors 321a and 321b, respectively. However, if a switching motor (not illustrated) for driving the drive member 32 is separately provided only for achieving the drive preparation control and the drive stop control, both the left drive member 32a and the right drive member 32b may be driven by the one motor 321 at the time of drive control.

According to this example, each of the left drive member 32a and the right drive member 32b is switched by the switching motor. A widely known mechanism is available for this switching control. Accordingly, this mechanism is not described in detail herein.

In addition, the drive control unit 14 in this example controls the switching motor at the time of drive preparation control to turn on and move the left drive member 32a and the right drive member 32b to the contact positions. Moreover, the drive control unit 14 also controls the switching motor at the time of the drive stop control to turn off and move the left drive member 32a and the right drive member 32b to the escape positions.

Further, at the time of the drive control, the drive control unit 14 controls the motor 321 driving both the left drive member 32a and the right drive member 32b, by performing control similar to the control in the different example (2) of the clutch member. Note that the second actuator 25 may also have a similar configuration in this case.

### [Different example of clutch member (4)]

In addition, a collet chuck can be employed as a different example of the clutch member. While an example of the first actuator 23 will be described below, a similar configuration may be applied to the second actuator 25. As illustrated in FIG. 7 by way of example, a clutch member 239 according to this example of the present embodiment includes a collet chuck 2391 which comes into either a holding state for holding a drive shaft 22J connected to the axis 22A of the first guide 22 or a release state for releasing the drive shaft 22J, a sleeve 2392, and a sleeve drive unit 2393.

The collet chuck 2391 is disposed on the rotation shaft of the motor 231. When the collet chuck 2391 rotates the motor 231 while holding the drive shaft 22J, the first guide 22 rotates around the axis 22A. In addition, the collet chuck 2391 is tapered in a direction from a distal end portion 2391E for holding the drive shaft 22J to a position where the motor 231 is disposed.

The sleeve 2392 has a cylindrical shape having an inside diameter substantially equal to an outside diameter of the collet chuck 2391, and is disposed on an outer circumference of the collet chuck 2391. The sleeve 2392 is so disposed as to be movable by the sleeve drive unit 2393 between a position P on the base side of the collet chuck 2391 and a position Q located in a tip direction 2391E from the position P. The sleeve 2391 at the position P is in a state for opening the collet chuck 2391. In this state, the collet chuck 2391 is in a release state for releasing the drive shaft 22J. Meanwhile, the sleeve 2391 at the position Q closes the collet chuck 2391. In this state, the collet chuck 2391 is in a state for holding the drive shaft 22J.

The sleeve drive unit 2393 moves the sleeve 2392 between the position P and the position Q described above in the axial direction of the collet chuck 2391. This movement may be achieved by a motor for rotating a gear engaging with a gear train provided in a longitudinal direction of the sleeve 2392 or by using other known methods for achieving linear movement.

Described next will be control of the clutch member 239 by the drive control unit 14. As in the above example, the drive control unit 14 in this example performs various types of control, i.e., drive preparation control, drive control, and drive stop control.

Specifically, it is assumed that the sleeve 2392 of the clutch member 239 is located at the position P in an initial state. At this time, the collet chuck 2391 is in the opened state (release state), and the drive shaft 22J idles. Even if the motor 231 is rotated, this rotation is not transmitted to the drive shaft 22J. Accordingly, the first guide 22 is not driven.

When the drive control unit 14 accepts a control instruction for tilting the columnar body 21 from the information processing device 2 in the release state of the clutch member 239, the drive control unit 14 performs drive preparation control. In this drive preparation control, the drive control unit 14 drives the sleeve drive unit 2393 to move the sleeve 2392 to the position Q. As a result, the collet chuck 2391 is closed and comes into the holding state. In this case, the drive shaft 22J is held by the collet chuck 2391, and comes into a state rotatable with the collet chuck 2391 as one body. In this manner, the drive control unit 14 completes the drive preparation control.

Moreover, the drive control unit 14 shifts to drive control after completion of the drive preparation control. In the drive control, the drive control unit 14 rotates the motor 231 in accordance with a control instruction input from the information processing device 2. For example, in a case where this control instruction is such an instruction for tilting the columnar body 21 by an angle θ with respect to the Z-axis positive direction, the drive control unit 14 drives the motor 231 to tilt the first guide 22 until output θc from the sensor 232 coincides with θ as the target, with reference to this output.

At this time, the power of the motor 231 is transmitted to the drive shaft 22J held by the collet chuck 2391 via the collet chuck 2391. Accordingly, the first guide 22 rotates around the axis 22A and tilts the columnar body 21. Thereafter, when the first guide 22 tilts up to the angle θ, the drive control unit 14 stops the action of the motor 231 on the basis of determination that the output θc coincides with the target θ (when θc changes from θ, the motor 321 is controlled in a direction for returning to θ).

Moreover, when the drive control unit 14 accepts a release instruction from the information processing device 2 as a control instruction, the drive control unit 14 executes drive stop control. In this drive stop control, the drive control unit 14 drives the sleeve drive unit 2393 to move the sleeve 2392 to the position P. As a result, the collet chuck 2391 is opened and comes into the release state. Accordingly, the drive shaft 22J comes into an idling state regardless of the rotation of the collet chuck 2391.

In this case, a sense of operation given by the columnar body 21 corresponding to the operation part becomes similar to a sense of operation given in a case where no actuator for driving the columnar body 21 is provided. As a result, strangeness felt by the user is reduced.

### [Reference Signs List]

1: Controller device
2: Information processing device
11: Control unit
12: Operation unit
13: Communication unit
14: Drive control unit
21: Columnar body
22: First guide
23: First actuator
24: Second guide
25: Second actuator
26: Pedestal
31: Following member
32: Drive member
121: Tilt operation part
231, 251: Motor
232, 252: Sensor
233, 233', 233", 253: Clutch member
239: Clutch member
261: Elastic body
2391: Collet chuck
2392: Sleeve
2393: Sleeve drive unit

## Claims

1. A controller device comprising:
an operation part that is tiltable;
a drive unit that generates power used for tilt control of the operation part;
a transmission unit that permits or interrupts transmission of the power generated by the drive unit to the operation part; and
a control unit that controls the transmission unit,
wherein the control unit controls the transmission unit in such a manner as to prohibit transmission of the power generated by the drive unit to the operation part at least while a tilt direction or a tilt angle of the operation part meets a predetermined condition.

2. The controller device according to claim 1, wherein the transmission unit is an electromagnetic clutch.

3. The controller device according to claim 1, wherein the transmission unit includes a one-directional transmission member that prohibits transmission of the power received by the operation part toward the drive unit.

4. The controller device according to claim 1, wherein the transmission unit includes a drive member that is driven by the drive unit and that is movable between a contact position where the drive member is in contact with the operation part to transmit the power to the operation part and an escape position where the drive member is separated from the operation part to interrupt power transmission to the operation part.

5. The controller device according to claim 4, wherein the drive member includes a second drive unit for moving the drive member between the contact position and the escape position.

6. The controller device according to claim 1, further comprising:
a first guide that supports the operation part in such a manner as to allow the operation part to be tiltable around a first axis,
wherein the transmission unit includes a collet chuck settable to at least either a holding state for holding a rotation shaft of the first guide or a release state for causing the rotation shaft of the first guide to idle, and
the collet chuck of the transmission unit is controlled to be brought into the release state to prohibit transmission of the power generated by the drive unit to the operation part at least while the tilt direction or the tilt angle of the operation part meets the predetermined condition.
